# NOUVEAU FASCICULE DE BREVET EUROPEEN

(11) **EP 2 268 439 B2**
(45) Date de publication et mention de la décision concernant l'opposition: **02.11.2022**
(45) Mention de la délivrance du brevet: 27.04.2016
(21) Numéro de dépôt: 09720613.0
(22) Date de dépôt: 10.03.2009
(51) Int. Cl.: B23C 5/22, B23B 27/16

(54) **PORTE-OUTIL MUNI DE PLAQUETTE DE COUPE À DÉFLECTEUR DE COPEAUX**
WERKZEUGHALTER BESTÜCKT MIT SCHNEIDEINSATZ MIT SPANABWEISER
TOOL HOLDER EQUIPPED WITH CUTTING INSERT HAVING A CHIP DEFLECTOR

(30) Priorité: 10.03.2008 FR 0801285
(43) Date de publication de la demande: 05.01.2011
(73) Titulaire: Sandvik Tooling France, 45100 Orléans (FR)
(72) Inventeur: FOUQUER, Richard, F-37540 Saint-Cyr-sur-Loire (FR)
(74) Mandataire: WSL Patentanwälte Partnerschaft mbB
(86) Numéro de dépôt international: PCT/IB2009/000479
(87) Numéro de publication internationale: WO 2009/112931

(56) Documents cités:
- WO-A-00/66305
- WO-A-03/084703
- WO-A-2007/085281
- DE-A1- 10 207 768

## Description

La présente invention concerne les plaquettes de coupe et leur montage sur les porte-outils, comme décrit par exemple par DE 10207768 ou US 2007/0245335 A1.

Une plaquette de coupe doit être positionnée avec précision sur le porte-outil afin de tailler avec précision la pièce à usiner et aussi d'éviter l'apparition de contraintes susceptibles d'endommager la plaquette et le dispositif de bridage associé.

Il existe plusieurs types de dispositifs de bridage de la plaquette dans un logement du porte-outil. D'une façon générale, le principe de chaque type de dispositif vise à faciliter l'opération de mise en place et d'enlèvement de la plaquette, tout en cherchant à garantir contre tout montage défectueux, c'est-à-dire éviter un bridage de la plaquette dans une position incorrecte.

Le logement présente en général une surface de fond plane, qui définit donc le plan de fonctionnement de la plaquette, formant une surface de pose sur laquelle la plaquette va initialement pouvoir glisser pour venir en butée sur deux parois de cadrage, respectivement latérale, ou longitudinale, et arrière, qui définissent ainsi un coin fixant la position fonctionnelle. Il peut toutefois être prévu que la paroi arrière comporte deux tronçons mutuellement inclinés pour définir à elle seule un tel coin, rentrant ou sortant.

Une façon de faire glisser la plaquette consiste à la repousser vers le coin arrière limité par les deux parois de cadrage, au moyen d'un élément coulissant prenant appui sur le porte-outil. Par exemple, il est prévu une vis "horizontale", c'est-à-dire à corps logé dans un trou taraudé du porte-outil à axe parallèle à la surface de fond et donc aussi à la surface supérieure de la plaquette, pour que sa tête "survole" le dessus de la plaquette en étant rappelée en arrière vers ce coin arrière, afin que le dessous de la tête, qui constitue un relief radial, bute sur une surface de butée frontale de la plaquette, c'est-à-dire tournée à l'opposé du coin arrière, et qu'ainsi il repousse la plaquette vers le coin arrière. Pour en outre finalement plaquer efficacement la plaquette contre la surface de fond sur laquelle elle a glissé, cette surface frontale est en général une rampe, qui induit donc une composante de placage vers la surface de fond du logement.

Une autre solution classique est de prévoir une vis "verticale", traversant librement un trou central reliant les faces inférieure et supérieure de la plaquette, pour que le dessous de sa tête descende en appui sur un secteur arrière de l'embouchure fraisée du trou, afin d'exercer, par effet de coin vers l'arrière, une force de repoussement vers le coin arrière et de bridage contre la surface de fond.

La fabrication des plaquettes comportant un trou de passage d'une vis de positionnement et de bridage pose toutefois des problèmes de qualité. En effet, la plaquette est formée par frittage à partir d'une poudre de matériau métallique qui est versée dans un moule pour atteindre le niveau de remplissage voulu, correspondant à l'épaisseur de la plaquette désirée. Pour éviter de devoir forer le trou après frittage, on introduit à sa place, dans la poudre, une tige calibrée à tête conique qui forme une réserve pour former une embouchure de réception d'une tête de vis de bridage.

Comme la tête de la tige est enfoncée de force dans la poudre, elle effectue un fort compactage des grains de poudre dans un volume virtuel constituant la paroi conique d'embouchure du trou. Lors du frittage, cette inhomogénéité de densité du matériau conduit à une inhomogénéité des propriétés mécaniques, comme par exemple le coefficient de dilation thermique. Or, une plaquette de coupe subit des cycles thermiques de grande amplitude lors de son utilisation. Il arrive donc que la paroi du trou se fende, en particulier pour les plaquettes de faible taille, puisque l'on ne peut pas réduire en proportion le diamètre de la vis de bridage, qui doit conserver au moins un certain pas, pour conserver une hauteur efficace de filet, et une certaine raideur.

Un autre problème qui se pose est lié au fait que les copeaux, glissant vers l'arrière sur une surface de dégagement constituant un bord avant de la face supérieure, en provenance d'une arête de coupe avant limitant cette surface de dégagement, viennent heurter le dessus de la tête de vis et endommagent en particulier la fente ou cavité équivalente de vissage.

La présente invention vise à proposer une solution à au moins l'un de ces deux problèmes, de fragilité des plaquettes et d'endommagement de la tête de vis ou équivalent.

A cet effet, la présente invention concerne un porte-outil muni d'une plaquette de coupe selon la revendication 1.

Ainsi, la plaquette est compacte, puisqu'elle ne nécessite pas l'existence d'un trou de bridage, et, en utilisation, la trajectoire des copeaux est dévoyée pour éviter d'atteindre le coulisseau, c'est-à-dire la tête d'une vis de bridage ou équivalent, en appui sur la surface de butée.

Selon l'invention, la surface de déflexion s'étend jusqu'à un niveau au dessus de l'arête de coupe frontale.

Ainsi, avantageusement, on s'assure que les copeaux formés par l'arête de coupe sont déviés et n'entrent pas en contact avec le dispositif de bridage mis en oeuvre.

En particulier, lorsque la plaquette est bridée au moyen d'un coulisseau dont la tête coopère avec la surface de butée d'entraînement de la plaquette, le fait que la surface de déflexion s'étende jusqu'à un niveau au dessus de l'arête de coupe frontale assure que les copeaux formés par l'arête de coupe frontale ne touchent pas la tête du coulisseau. La surface de butée d'entraînement est située plus près du flanc arrière que de l'arête frontale.

La tête de vis de bridage ou équivalent sera ainsi éloignée au maximum à l'arête de coupe, d'où sont émis les copeaux, c'est-à-dire que la tête de vis pourra, au montage, se rapprocher au maximum du corps du porte-outil et même venir s'y loger, conjointement avec une zone de bord arrière de la plaquette. La zone arrière du logement du porte-outil peut alors comporter une paroi supérieure pour former une poche ou fente d'où la plaquette fait saillie par essentiellement la surface de dégagement.

Selon l'invention, la paire de surfaces est portée par un relief commun, la plaquette présentant une pluralité de paires de dits flancs arrière de cadrage et de surfaces de dégagement à arête de coupe, pour offrir une même pluralité de positions angulaires de montage, dans laquelle le dit relief commun présente un profil latéral présentant la dite paire de surfaces en relief en au moins une dite pluralité de secteurs d'anneau, formant ainsi globalement une ligne de crête délimitant un cratère à flanc interne comportant une dite pluralité de surfaces de butée d'entraînement et à flanc externe comportant une dite pluralité de surfaces de déflexion.

Dans une forme de réalisation très simple, l'anneau présente un profil latéral rectiligne, c'est-à-dire une ligne de crête de hauteur fixe. La ligne de crête peut être une simple ligne sommitale ou une zone de crête formant un anneau plan ou à surface arrondie, présentant donc une certaine extension radiale, reliant le versant interne au versant externe. En vue en plan, l'anneau doit présenter, angulairement, une dite pluralité de secteurs identiques, c'est-à-dire un même motif élémentaire par secteur. Il peut donc s'agir d'une forme circulaire ou d'une forme à facettes telle qu'un triangle équilatéral, un carré, un hexagone ou autres formes de ce type. Il peut toutefois être prévu que les diverses positions angulaires de montage ne soient pas toutes mutuellement décalées d'un même pas angulaire, de sorte que les formes régulières indiquées ci-dessus sont alors à déformer pour les adapter aux divers pas angulaires.

La surface de déflexion comporte avantageusement au moins un rostre pour fendre les copeaux. Ceux-ci sont ainsi découpés en lamelles voisines qui, étant donc de largeur plus réduite, présentent une raideur et un encombrement réduits et peuvent ainsi plus facilement être éjectées.

La surface de déflexion peut en particulier comporter une pluralité de dits rostres présentant des orientations différentes, de sorte que les trajectoires de dévoiement des copeaux seront non parallèles, et de préférence divergentes.

Un montage de bridage selon l'invention est très compact puisque la trajectoire du coulisseau est proche de la face supérieure de la plaquette, de sorte que l'on peut par exemple disposer en couronne un grand nombre de tels montages sur une fraise, notamment un plus grand nombre qu'avec les montages de l'art antérieur.

De préférence, la surface de déflexion de la plaquette de coupe est conformée pour dévier les copeaux formés par l'arête de coupe frontale hors d'une trajectoire vers la tête du coulisseau.

Le logement comporte avantageusement un plafond pour former une poche de profondeur supérieure à une valeur de distance entre la surface de flanc arrière de cadrage et la surface de butée, cette dernière étant donc logée dans la poche.

Le plafond peut comporter un volume ouvert de passage du relief latéral de tête du coulisseau lui permettant d'atteindre la surface de butée.

De façon préférée, le trou de guidage s'étend de façon à ce que le coulisseau passe de façon quasiment tangente au-dessus d'une arête supérieure du flanc arrière de la plaquette.

De manière avantageuse, le logement comporte en outre une paroi longitudinale, radiale et axialement arrière, et le trou de guidage est orienté pour que le relief latéral de la tête de coulisseau, en butée sur la surface de butée d'entraînement, exerce un effort sur la plaquette de coupe en direction de la surface de fond, de la paroi latérale et de la paroi longitudinale radiale et axialement arrière.

De préférence, le relief latéral de la tête de coulisseau, en butée sur la surface de butée d'entraînement, bloque la plaquette de coupe contre la surface de fond, la paroi latérale et la paroi longitudinale radiale et axialement arrière.

De manière avantageuse, la surface périphérique du porte-outils, située au dessus de la plaquette de coupe, est située en retrait par rapport à la surface périphérique du porte-outils, située en dessous de la plaquette de coupe, le retrait étant au moins égal à la moitié de la longueur de la plaquette de coupe entre l'arête de coupe frontale et la surface de flanc arrière.

Ainsi, le corps du porte-outil est également protéger contre les projections de copeaux formés par l'arête de coupe.

Avantageusement, le porte-outil comporte un canal longitudinal d'alimentation, en liquide de lubrification, d'un canal ménagé dans le dit coulisseau pour que celui-ci serve de buse.

Le coulisseau de bridage, par exemple une vis, sert donc aussi de buse d'éjection du liquide de lubrification sur la face supérieure de la plaquette, c'est-à-dire au niveau de l'arête de coupe. On notera qu'un tel coulisseau formant buse peut aussi être prévu dans un porte-outil non conforme à l'invention.

Ainsi, avantageusement, la lubrification des arêtes de coupe est réalisée au moyen d'une buse située à proximité immédiate de l'arête de coupe. Ce positionnement de la buse permet d'assurer une meilleure lubrification de l'arête de coupe. En particulier, ce positionnement de la buse permet d'obtenir un jet de lubrifiant en direction de l'arête de coupe présentant une plus grande pression. Cette pression du jet de lubrifiant contribue à éloigner les copeaux de l'arête de coupe.

L'invention sera mieux comprise à l'aide de la description suivante d'une forme de réalisation d'un porte-outil muni d'une plaquette selon l'invention, en référence au dessin annexé, sur lequel :
- La figure 1 est une vue en perspective latérale d'une fraise de contournage équipée d'une pluralité de plaquettes de coupe selon l'invention,
- la figure 2 est une vue frontale agrandie de la fraise de la figure 1,
- la figure 3 est une vue de dessus agrandie en perspective d'une telle plaquette,
- les figures 4, 5, 6 sont des vues latérales en coupe d'un logement de la fraise recevant la plaquette lors de son montage au moyen d'une vis d'entraînement en glissement et de bridage final,
- les figures 7 et 8 sont respectivement une vue de dessus de la plaquette avant bridage dans le logement, correspondant aux figures 4 et 5, et la même vue en position finale de montage correspondant à la figure 6,
- la figure 9 est une vue de dessus montrant la face supérieure de la plaquette plaquée contre le fond du logement par la vis de bridage qui comporte en outre un canal de lubrification de l'arête de coupe de la plaquette, alimenté par un canal axial ménagé dans le corps de la fraise, et - la figure 10 est une vue latérale de la plaquette découpant un copeau.

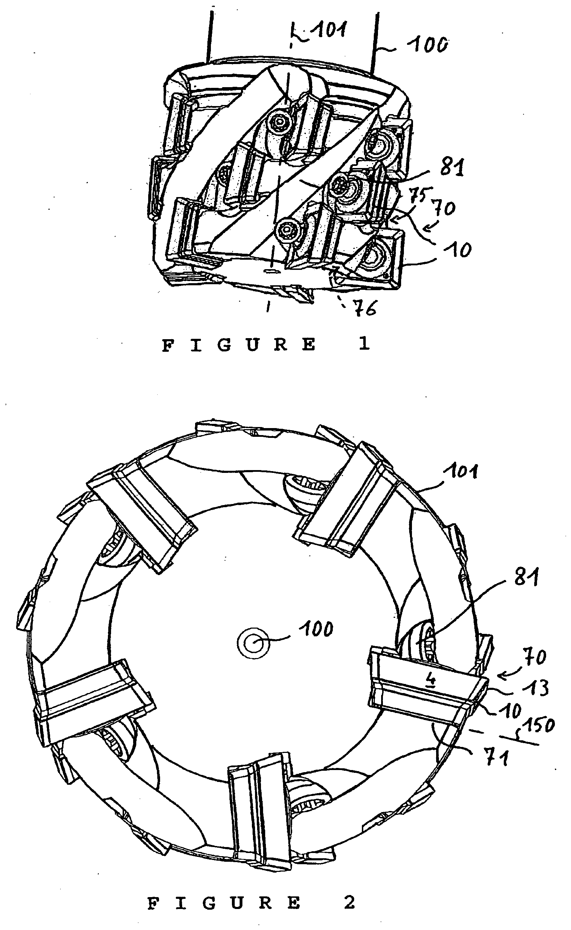

Les figures 1 et 2 représentent un porte-outil qui est ici rotatif sous forme d'une fraise 101 d'axe général 100, de symétrie et de rotation, comportant, à une extrémité avant (figure 2), une couronne formée d'une pluralité d'ici cinq logements identiques, tous référencés 70, équi-répartis angulairement. Chaque logement 70 constitue une poche en fente s'étendant selon globalement un plan axial angulairement distant de 72 degrés du logement 70 voisin, le logement 70 présentant un fond horizontal 71, ou base, ici dit horizontal, s'étendant dans un plan 150 à direction d'extension sensiblement radiale par rapport à l'axe général 100.

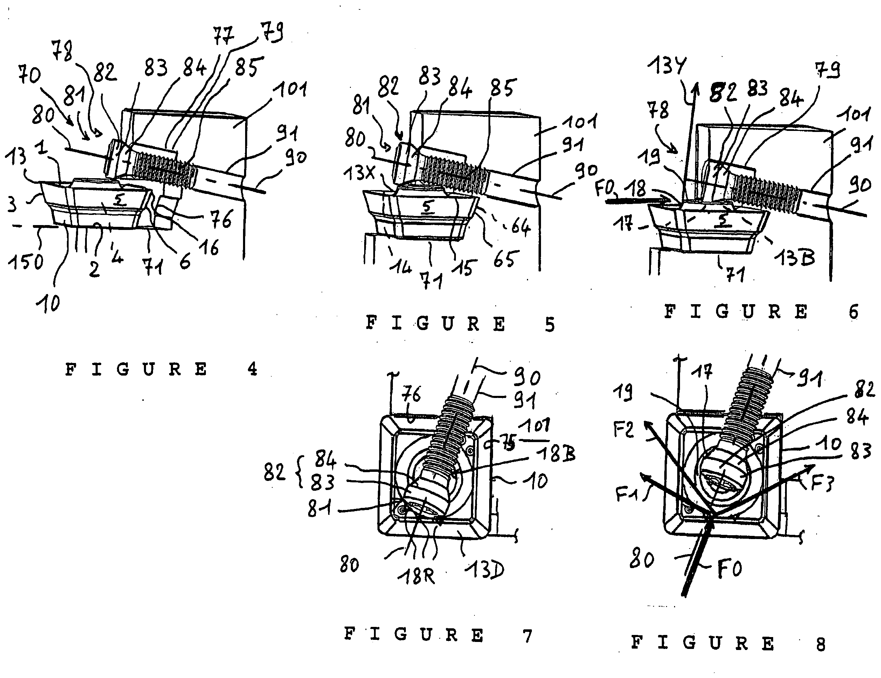

En référence aux figures 4 à 8, une tête 82, d'une vis d'entraînement et de bridage final 81, comporte un tronçon d'extrémité de manoeuvre à section circulaire 83, ici cylindrique, qui se poursuit par une partie de col tronconique 84 de raccordement à un corps fileté 85 d'axe 80 (figure 4) en prise dans un trou fileté 91 d'axe 90 ménagé dans la fraise 101, pour faire glisser, sensiblement radialement à l'axe général 100, une plaquette de coupe 10 sur le fond 71 afin de l'amener jusqu'à une position de montage prédéterminée, cadrée dans le logement 70 et telle que représentée sur les figures 1 et 2. De préférence, dans cette position de montage, la plaquette de coupe repose sensiblement de toute sa surface inférieure sur le fond 71 du logement 70.

La figure 1 montre que, dans cet exemple, il est prévu trois telles couronnes de plaquettes 10, frontale, intermédiaire et arrière, occupant des positions étagées axialement et à positions mutuellement décalées angulairement autour de l'axe général 100.

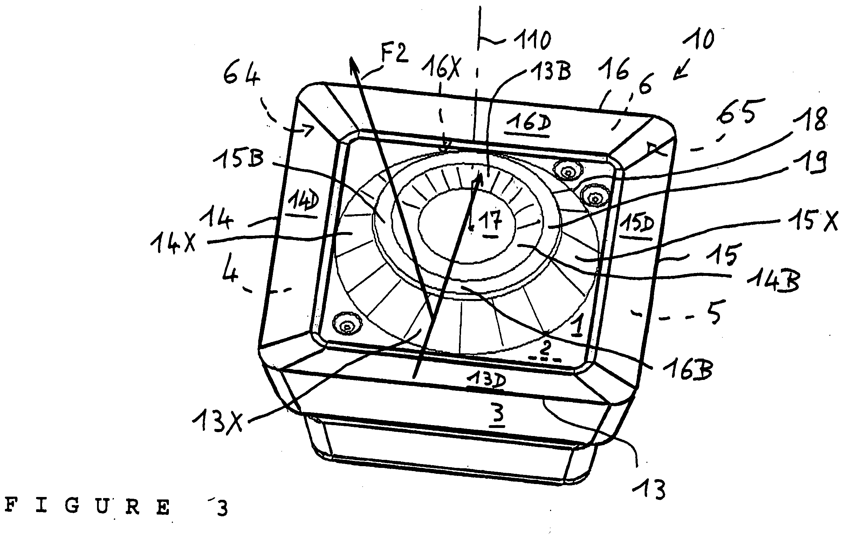

En référence à la figure 3, et aussi aux figures 4, 5, 6, 7 et 8, on voit que la plaquette 10, qui présente ici un profil en plan globalement carré en vue en plan (figures 7 et 8), comporte une face supérieure 1 opposée à une face inférieure 2, d'appui sur le fond 71 du logement 70, ainsi qu'une pluralité d'ici donc quatre flancs, à savoir un flanc dit avant 3, deux flancs longitudinaux, ou latéraux, 4 et 5 (ce dernier visible sur les figures 4, 5, 6), dits de gauche et de droite, qui se raccordent, par une arête de coin respective de gauche 64 ou de droite 65, sensiblement verticale, à un flanc arrière de cadrage 6.

La plaquette 10 étant ici de type à indexation, c'est-à-dire pouvant être montée selon une quelconque parmi quatre orientations possibles séparées deux à deux de 90 degrés, la face supérieure 1 présente un pourtour constituant quatre surfaces en forme de bandes de dégagement de copeaux 13D, 14D, 15D, 16D délimitant, avec chaque flanc respectif 3, 4, 5, 6, une arête de coupe horizontale respectivement avant 13, de gauche 14, de droite 15, et arrière 16.

Chacun des quatre flancs 3 à 6 pouvant ainsi venir occuper la position d'un autre, par rapport à la présente description, les termes "avant", "arrière" et "longitudinal" n'ont donc ici qu'une valeur relative, à titre de référence relative, et seraient donc à transposer si la plaquette 10 occupait une autre des trois positions angulaires possibles. De même, pour la commodité de l'exposé, le plan 150 du fond 71 du logement 70 est ici supposé être horizontal, de sorte que les directions horizontales et verticale sont ainsi référencées par rapport au fond 71 ou au plan 150. En cas de montage sur un plan 150 non horizontal, le présent exposé resterait évidemment valable après la transposition voulue du référentiel d'orientation.

Les figures 1 et 2 montrent que l'arête de coupe avant 13 est montée selon une orientation axiale sur la fraise 101, c'est-à-dire de façon sensiblement parallèle à l'axe général 100. On notera toutefois que, dans cette application, les plaquettes 10 de la couronne frontale servent aussi pour une attaque frontale, c'est-à-dire que, en plus d'une dite arête de coupe avant 13 disposée en saillie radiale, une dite arrête de coupe latérale dite de gauche 14 est en saillie axiale hors de son logement 70. Les logements 70 de la couronne frontale sont donc ouverts en direction radiale de la fraise 101, tout comme les logements 70 des autres couronnes axialement en arrière, mais aussi en direction axiale. Chaque logement 70 comporte une paroi longitudinale de droite 75, radiale et axialement arrière, et une paroi arrière de cadrage 76, axiale, pour recevoir et cadrer les flancs respectifs longitudinal de droite 5 et arrière 6.

La figure 3, représentant uniquement la plaquette 10, et les figures 4 à 8 illustrant son montage dans le logement 70, montrent que la face supérieure 1 présente une paire de reliefs alors fonctionnels, dont l'un est un déflecteur de copeaux 13X et dont l'autre est une butée 13B d'entraînement de la plaquette 10 par un coulisseau, ici la vis de bridage 81, jusqu'à la position de montage cadrée prédéterminée, c'est-à-dire avec le flanc arrière 6 en appui de cadrage contre la paroi arrière de cadrage 76. Le flanc longitudinal de droite 5 est de même cadré contre la paroi longitudinale de droite 75 du logement 70, axialement la plus en arrière pour servir d'appui contre le recul axial de la plaquette 10 sous l'effet des forces de réaction de la pièce à usiner, ceci pour ce qui concerne la couronne frontale. Dans la présente description, les termes "déflecteur" et "butée" désignent tout aussi bien le volume de matière constituant le relief que la surface de ce relief qui en assure la fonction.

En allant de l'avant vers l'arrière de la plaquette 10, la face supérieure 1 présente un profil latéral comportant un motif spécifique. On trouve en effet l'arête de coupe avant 13, qui se poursuit par la bande de dégagement 13D, le déflecteur avant 13X, la butée d'entraînement 13B et l'arête de coupe arrière 16. La bande de dégagement avant 13D, qui présente classiquement une forme en rampe en légère descente vers l'arrière de la plaquette 10, peut ne pas se poursuivre jusqu'au déflecteur 13X, c'est-à-dire que, en pareil cas, une bande intermédiaire non fonctionnelle ainsi définie sera simplement survolée par les copeaux mais ne coopérera pas efficacement avec ceux-ci pour les guider, cette fonction étant assurée de façon suffisante par la bande de dégagement avant 13D, située plus en avant. Le relief constituant la butée d'entraînement 13B doit, dans cet exemple, être situé à une certaine distance de l'arête de coupe arrière 16 pour y ménager la bande de dégagement arrière 16D, puisque l'arête de coupe arrière 16 peut être montée en position avant.

En référence aux figures 6 et 8, de position finale, les copeaux taillés par l'arête de coupe avant 13 glissent sur la bande de dégagement avant 13D et atteignent le déflecteur avant 13X. De préférence comme ici, le déflecteur avant 13X n'est pas un épaulement vertical mais une rampe, rectiligne ou non, par exemple à pente augmentant progressivement, telle que parabolique, pour dévoyer progressivement la trajectoire des copeaux initialement quasi horizontale selon une flèche FO, sur la bande de dégagement avant 13D, vers une direction 13Y nettement montante, c'est-à-dire pour les écarter d'une trajectoire selon une direction 13F, partant de l'arête de coupe 13, plus précisément de l'arrière de la bande de dégagement 13D, et allant vers la butée 13B, et en particulier vers le sommet de la butée 13B, c'est-à-dire la zone qu'occupe la tête de vis 81. Une fente classique de vissage, ou une cavité à pans, que comporte une surface radiale de sommet de la tête de vis 82, est ainsi protégée contre toute attaque par des projections métalliques, en particuliers des copeaux.

Le déflecteur avant 13X définit ainsi sensiblement, au-dessus de la face supérieure 1, un volume protégé en demi-cône à l'intérieur duquel se trouve le déflecteur avant 13X. Pour que la tête de vis 82 se trouve en entier dans ce volume protégé, le sommet du demi-cône, c'est-à-dire le déflecteur avant 13X, occupe une position avancée au maximum par rapport à la butée 13B, offrant ainsi une section ou hauteur maximale de volume protégé au niveau de la butée 13B.

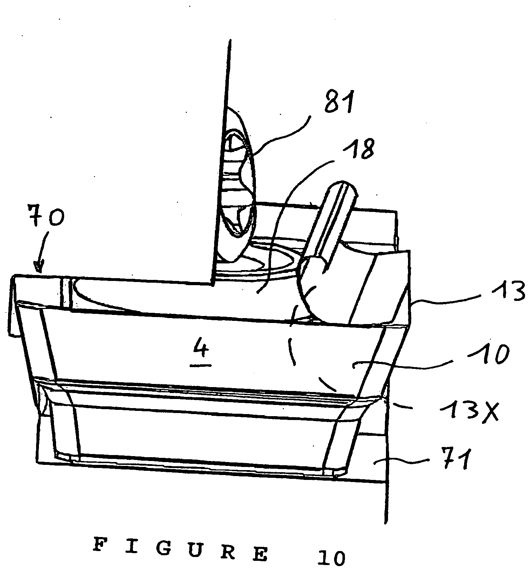

Comme cela est notamment visible sur les figures 3 à 6 et 10, le déflecteur avant 13X s'étend jusqu'à un niveau au dessus de l'arête de coupe avant 13. Ainsi, comme cela est visible notamment sur la figure 10, les copeaux formés par l'arête de coupe 13 sont déviés hors d'une trajectoire vers la tête 82 de la vis d'entraïnement et de bridage final 81. Par conséquent, les copeaux formés par l'arête de coupe n'entrent pas en contact avec la tête 82 de la vis. L'usure de cette tête 82 due à la projection des copeaux sur cette tête est ainsi évitée.

Pour permettre le fonctionnement voulu selon l'une quelconque des quatre positions de montage, le motif ci-dessus de surfaces ou reliefs successifs existe en quatre exemplaires, en quatre secteurs fonctionnels mutuellement espacés deux à deux de 90 degrés par rapport à un axe central vertical virtuel 110 de symétrie de la plaquette 10, c'est-à-dire perpendiculaire au centre de la face supérieure 1.

Dans cet exemple, pour simplifier la forme générale des reliefs, chaque secteur fonctionnel est relié à ses deux voisins par un secteur non fonctionnel auquel on a donné un dit profil de secteur fonctionnel. En d'autres termes, le profil ci-dessus existe selon tout plan de coupe contenant l'axe virtuel de symétrie 110, c'est-à-dire que le déflecteur avant 13X et trois déflecteurs homologues 14X, 15X, 16X, mutuellement décalés de 90 degrés, sont des secteurs d'un même premier anneau ou couronne en relief sur la face supérieure 1 et, de même, la butée 13B et trois butées homologues 14B, 15B, 16B sont des secteurs d'un même second anneau. Dans cet exemple, les premier et second anneaux constituent deux surfaces respectives d'un même relief, en bague, et précisément en forme de cône 18 évidé par un cratère central 17. Un versant externe 18X du cône 18 constitue le premier anneau, portant les déflecteurs 13X, 14X, 15X, 16X, et un versant interne 18B du cône 18 constitue le second anneau, portant les butées 13B, 14B, 15B, 16B. On notera que le cratère 17 peut, contrairement au dessin, ne pas présenter de surface de fond, c'est-à-dire que le versant interne 18B n'est pas alors une bande circulaire tronconique mais forme une surface vraiment conique, avec un sommet, occupant ici une position à altitude inférieure, égale ou supérieure à une altitude moyenne des diverses autres surfaces de la face supérieure 1. En d'autres termes, le cône principal défini par sa surface externe 18X est évidé par le cône coaxial (17) retourné.

On notera que, comme la surface de butée 13B, ou 18B, est ici concave, précisément en arc de cercle en vue en plan, la trajectoire de la partie tronconique 84 de la vis de bridage 81 peut ainsi être prévue pour atteindre la surface interne 18B dans un secteur angulaire de l'anneau 18 situé à distance minimale de la paroi arrière 76 du logement 70, c'est-à-dire au fond de la cavité ainsi définie par référence à la direction de la paroi arrière 76, axiale par rapport à l'axe général 101. De la sorte, la force de pression exercée par la tête de vis 82 selon la direction 90 du trou 91 sur la butée 13B, ou 18B concave, c'est-à-dire une direction essentiellement radiale par rapport à l'axe général 101, présente toutefois, grâce à la concavité ci-dessus qui entraîne un effet de coin ou de remontée sur un flanc axialement (101) arrière de la concavité, une composante qui s'oppose aux forces de repoussement axial (101) vers l'arrière exercées par la pièce à usiner sur l'arête de coupe de gauche.

Comme tout effet de coin présente un effet maximal d'amplification des forces lorsque l'angle de chasse latérale est faible, il peut être prévu, pour mieux résister à ce repoussement axialement arrière, que la partie tronconique 84 "atterrisse" initialement un peu plus axialement (101) en avant du point de fond de la concavité ci-dessus. La zone de contact (18B) n'est donc plus parallèle à la paroi de fond 76 (ou à l'axe général 101) mais c'est un flanc en position avant, par rapport à l'axe général 101, de la surface 18B concave, qui est donc légèrement incliné par rapport à la paroi de fond 76, c'est-à-dire qui s'éloigne de l'axe général 101 en allant vers l'avant de celui-ci. Cette inclinaison permet ainsi d'exercer initialement, au bridage, une composante de force tendant à repousser la plaquette 10 axialement (101) vers l'avant. Cette inclinaison est toutefois limitée pour que le coefficient de frottement de la plaquette 10 sur le logement 70, et en particulier sur la paroi arrière 76 et le fond 71 qui assurent essentiellement le bridage, empêche tout glissement parasite de celle-ci axialement (10) vers l'avant, lors du serrage de la vis 81.

Comme évoqué plus haut, le déflecteur avant 13X est disposé à distance maximale en avant de la butée 13B, et celle-ci est disposée le plus en arrière possible, c'est-à-dire que le cône 18 est de diamètre maximal, toutefois compatible avec des bandes de dégagement 13D, 16D de longueur utile convenable, selon la direction de la flèche F0. Le cône 18 étant centré sur l'axe vertical 110, le déflecteur avant 13X et la butée 13B sont donc situés sur deux moitiés différentes de la plaquette 10, respectivement avant et arrière. La butée 13B est ainsi située plus près du flanc arrière 6 que du flanc avant 3 limité par l'arête frontale 13.

Les figures 4 à 6 montrent qu'un plafond 77 du logement 70 constitue une embouchure élargie du trou de guidage 91, cette embouchure étant égueulée dans sa partie basse, au moins dans la zone en regard de la butée 13B, formant ainsi un volume de passage ouvert latéralement en forme de rainure 79 dans le plafond 77, pour que le point courant inférieur de la partie tronconique 84 soit libre pour buter sur la butée 13B. Latéralement à la rainure 79, le reste du plafond 77 peut présenter toute hauteur quelconque compatible avec la valeur d'épaisseur de la plaquette 10, c'est-à-dire que le fond de la rainure 79 peut constituer la totalité de la partie de plafond 77 au droit de laquelle court la tête de vis 82.

La figure 6 montre que le logement 70 est suffisamment profond, tel que défini par la position de sa paroi arrière 76, pour qu'environ la moitié arrière de la plaquette 10 soit surplombée par le plafond 77, c'est-à-dire que la moitié arrière de la bague en cône 18 est logée dans une poche 78, constituée par la moitié arrière du logement 70, dont la moitié avant présente une "terrasse" constituée par la moitié avant du fond 71, qui sert de contre-appui pour résister aux forces de réaction de la pièce à usiner. La butée 13B est donc située bien à l'intérieur de la poche 78, à une certaine distance en retrait par rapport au bord avant du plafond 77, et la tête de vis 82 présente une longueur sensiblement limitée à cette valeur de retrait pour ainsi être quasi-totalement logée dans la poche 78 et donc abritée (figure 8).

La tête de vis 82 suit une trajectoire oblique par rapport au fond 71, précisément descendante vers celui-ci en allant vers la paroi arrière 76, cette trajectoire permettant à la tête de vis 82 de survoler le cratère 17, en coupant ou non l'axe virtuel 110. Précisément, compte tenu du diamètre de la tête de vis 82, sa trajectoire est telle que la partie courante, lors du vissage, instantanément la plus basse de la tête de vis 82 va aborder une ligne sommitale ou crête 19 (surtace ou simple ligne de crête circulaire) du cône 18 selon une altitude au moins égale à la hauteur de cette ligne de crête 19, pour ainsi disposer d'une première marge ou garde en hauteur de préférence positive, ou au moins nulle.

Toutefois, cette première marge est limitée de façon à ce que, lorsque la tête de vis 82 va atteindre un secteur opposé (diamétralement ou non) du cratère 17, une seconde marge homologue soit négative pour que le dessous de la partie tronconique 84 vienne buter contre le versant interne 18B du cratère 17, sur la butée prévue 13B, ou 14B, ou 15B ou 16B dans respectivement les autres cas de montage. L'angle de descente de la trajectoire de la tête de vis 82 est ainsi suffisant, compte tenu de la distance horizontale de survol du cratère 17, pour que la première marge se transforme en une seconde marge négative. Le déflecteur 13D est donc ineffectif pour la tête de vis 82. La plaquette 10 est ainsi entraînée en glissement jusqu'à ce que ses deux flancs de cadrage, longitudinal de droite 5 et arrière 6, butent contre respectivement les parois de cadrage longitudinales de droite 75 et arrière 76. Pour guider la plaquette 10 vers l'arête de coin respective de droite 65, le corps 85 de la vis de bridage 82 est guidé par le trou fileté 91 d'axe 90 présentant, en vue en plan (71 ou 150) une direction d'extension oblique par rapport à la paroi longitudinale de droite 75, c'est-à-dire allant vers celle-ci ainsi que vers la paroi arrière 76.

Dans cet exemple, pour assurer un bridage plus efficace, la paroi de plafond 77 est relativement basse, c'est-à-dire que la face supérieure 1 de la plaquette 10 est proche du plafond 77. La partie courante de la partie cylindrique 83 occupant une position instantanée sommitale vient, par flexion de la vis 81, en appui sur le plafond 77, mais ceci uniquement après que la partie conique 84 a atteint la butée 13B sur la bague de butée du versant interne 18B. De la sorte, lors de la poursuite du vissage, mais alors dans un but de bridage faisant suite au glissement sans bridage, la partie conique 84 de la tête de vis 82 monte en glissant, par effet de coin, sur le versant interne 18B, en rampe. La flexion de la vis 81, provoquée par la force de réaction du versant interne 18B, se trouve limitée puisque la partie sommitale courante de la partie cylindrique 83 vient alors buter contre le plafond 77. Bien évidemment, la zone du plafond 77 située du côté de l'ouverture du logement 70 présente la hauteur voulue, ou au moins un canal ou passage 49, pour le libre passage en vissage initial de la tête de vis 82, puisque, comme indiqué, sa trajectoire est descendante et présente donc une hauteur maximale dans la position pour laquelle la vis 81 est à l'état dévissé.

En variante, la vis de bridage 81 peut être remplacée par un coulisseau comportant un corps libre en translation rectiligne (axe 90) ou en arc de cercle guidé par le trou 91, et comportant un croc latéral inférieur pour le bridage, et éventuellement un relief supérieur pour buter sur le plafond 77 après flexion du corps, ou un disque transversal les intégrant tous les deux si le coulisseau est rectiligne et rotatif, donc présente le profil d'un clou. Un cliquet latéral sert alors à verrouiller le coulisseau dans la position de bridage de la plaquette 10.

En variante encore, le coulisseau peut être remplacé par une pièce de bridage comportant un nez de bridage à trajectoire essentiellement descendante, par exemple une sorte de levier, venant exercer, sur la butée 13B, une force de placage de la plaquette 10 sur le fond 71 et, par effet de coin, une force de maintien du cadrage présentant deux composantes en direction des parois respectivement longitudinale de droite 75 et arrière 76.

En variante, la forme en bague ci-dessus est remplacée par une forme globalement carrée en vue de dessus, et décalée d'un demi-pas angulaire, c'est-à-dire de 45 degrés, par rapport au profil en plan de la plaquette 10. De la sorte, chaque coin du carré pointe en regard d'un point à mi-longueur de l'arête de coupe en regard 13, 14, 15, 16. Les copeaux (figure 10) produits par l'arête de coupe active 13 viennent donc buter sur le coin correspondant, qui forme un rostre sur lequel viennent "s'empaler" les copeaux, c'est-à-dire que ceux-ci se trouvent fendus en deux à mi-largeur. Ceci est aussi valable pour une plaquette 10 à une seule position de montage, donc ne comportant qu'un seul déflecteur 13X.

D'une façon générale, en référence à la figure 3 ou 7, la forme en bague peut donc être quelque peu modifiée, précisément être crénelée, par adjonction de quatre ensembles de chacun N tels rostres 18R (un seul ensemble est représenté, pour N = 3), pour diviser les copeaux en largeur en N+1 lamelles. En particulier, chaque rostre 18R étant défini par deux surfaces mutuellement obliques séparées par une arête de rostre descendant vers l'avant jusqu'à sensiblement le niveau de la bande de dégagement avant 13D, les rostres 18R de bordure, aux extrémités de l'ensemble considéré, peuvent être partiellement tournés vers l'extérieur, c'est-à-dire vers le flanc longitudinal voisin 4 ou 5, pour que la lamelle de copeau qu'ils détachent s'écarte latéralement des autres. Les rostres 18R de chaque ensemble peuvent ainsi être disposés en arc de cercle comme dessiné, en conservant par exemple la forme globale de l'anneau en cône 18, si bien que chaque ensemble va aussi de plus en plus défléchir latéralement les trajets de renvoi des copeaux à mesure que l'on se rapproche de l'extrémité de l'ensemble. La flèche horizontale F0 de trajectoire des copeaux incidents vers l'arrière se transforme en les trois flèches montantes de déflexion, à savoir les flèches latérales F1 et F3 (figure 8) qui sont ainsi divergentes, en vue en plan, par rapport à une flèche centrale de déflexion F2, cas particulier de la flèche 13Y, d'indication générale de la déflexion. Le trajet d'incidence des copeaux, dirigé exactement vers l'arrière selon la flèche F0, parallèle à la direction d'extension des flancs longitudinaux 4 et 5, est ainsi transformé, après réflexion sur l'ensemble des N rostres 18R, en une pluralité de N+1 trajets ascendants et divergents, définissant ainsi un volume protégé de forme globalement en demi-cône plus ou moins aplati selon l'efficacité, c'est-à-dire l'angle respectif, des déflexions latérale et verticale.

Les lamelles de copeaux marginales, à trajectoire selon les flèches F1 ou F3, sont donc aussi évacuées vers le haut, éventuellement avec une pente de trajectoire de montée plus faible que pour les lamelles centrales selon la flèche centrale F2, c'est-à-dire que l'ensemble des N+1 trajectoires couvre en fait moins de la surface du demi-cône indiqué ci-dessus. Dans un cas particulier, les pentes des divers rostres 18R sont harmonisées pour que toutes les trajectoires F1 à F3 présentent la même pente de montée, avec éventuellement un décalage arrière (flèches F1 et F3) pour les lamelles défléchies par les rostres 18R les plus latéraux, puisqu'un tel rostre latéral 18R est situé un peu plus loin de l'arête de coupe avant 13 que ne le sont le ou les rostres 18R centraux.

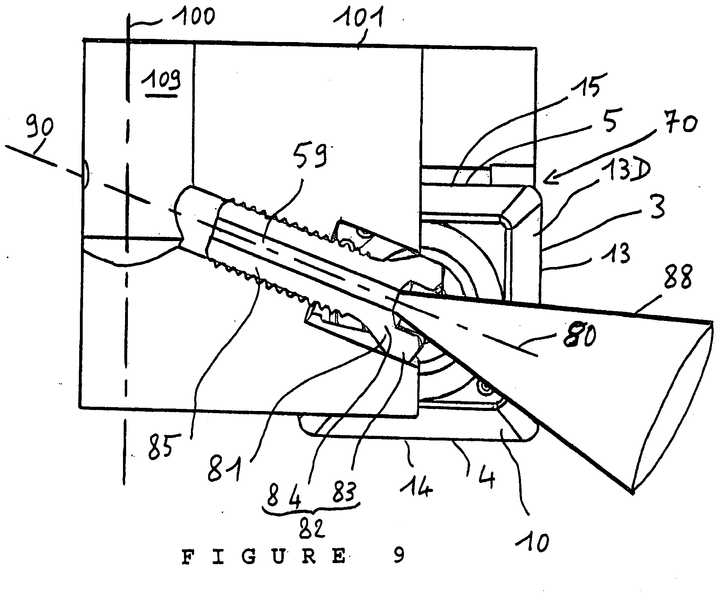

Pour la lubrification de l'arête de coupe 13, la figure 9 montre que le trou 91 de guidage et de fixation de la vis 81 communique avec un canal longitudinal 109, commun pour tous les logements 70, ménagé dans le corps de la fraise 101, ici axé sur l'axe de rotation 100 pour éviter un déséquilibre des masses. La vis 81 est axialement percée, de bout en bout, d'un canal axial 59. Le canal commun 109 est alimenté en liquide de lubrification des diverses plaquettes de coupe 10 par un joint rotatif (non dessiné) disposé à une extrémité arrière du corps de la fraise 101, soit en forme de capuchon d'extrémité soit sous forme de collier à profil en U ou équivalent dont les deux extrémités libres des deux branches sont des lèvres d'étanchéité appliquées sur un tronçon du corps, cylindrique, de la fraise 101 dans lequel auront été ménagés un ou plusieurs passages quelque peu radiaux rejoignant le canal commun 109. Le collier est alimenté sous pression pour vaincre la force centrifuge s'opposant à l'injection vers l'axe 100 et vaincre les pertes de charge dans les canaux 59 des vis 81.

Comme le montre le cône virtuel, d'axe 90, référencé 88 sur la figure 9, le fluide de lubrification est ainsi éjecté par la vis de bridage 81, servant donc de buse de lubrification, au niveau de la face supérieure 1 de la plaquette 10, et la force centrifuge éjecte ce liquide directement vers la bande de dégagement 13D, et donc sur l'arête de coupe 13 alors active.

On notera que cet agencement de canaux d'amenée de liquide de lubrification pourrait aussi être prévu dans tout autre montage hors du contexte de la présente invention, puisque le déflecteur avant 13X n'intervient pas pour cette lubrification. Il suffit en effet que la plaquette 10 soit bridée par un élément d'appui sur sa face supérieure 1 et relié au corps de la fraise 101 en présentant un canal pour servir de buse. Par exemple, comme évoqué, la vis 81 pourrait être remplacée par un coulisseau non fileté comportant un relief latéral, tel qu'une gorge, pour être bloqué en position de bridage par un élément de verrouillage tel que le nez d'une vis latérale formant pointeau. Un tel coulisseau, non rotatif et de section transversale de forme quelconque, peut aussi présenter un profil en arc de cercle, l'axe 91 prenant alors un tel profil.

## Revendications

1. Porte-outil muni d'une plaquette de coupe (10),
la plaquette de coupe comportant une face inférieure (2), de pose sur la surface de fond (71) d'un logement (70) de réception de la plaquette de coupe, appartenant au porte-outil (101), opposée à une face supérieure (1) dont une zone de bord avant constitue une surface (13D) de dégagement de copeaux produits par une arête de coupe frontale (13) associée, et comportant une surface de flanc arrière (6), de cadrage dans une position de montage contre une paroi arrière (76) du logement (70), de réception en cadrage de la surface de flanc arrière (6) de la plaquette (10), le porte-outil comportant également comportant un trou (91) de guidage en translation, selon une direction déterminée (90), d'un corps (85) de coulisseau (81) dont une tête (82) comporte un relief radial (83, 84) destiné à venir buter contre une surface de butée d'entraînement (13B) de la plaquette (10) se dressant la face supérieure (1), dans laquelle sur la face supérieure (1), se dresse plus en avant que la surface (13B) de butée d'entraînement de la plaquette (10) par le coulisseau (81) du porte-outil (101) vers la position de montage, une surface de déflexion (13X) de la trajectoire des copeaux à l'écart d'une direction (13F) allant d'un bord arrière de la surface de dégagement (13D) vers la surface de butée d'entraînement (13B), la direction (70) du trou de guidage (71), en allant vers la paroi arrière (76), étant inclinée en descente par rapport à un plan (150) d'extension globale de la surface de fond (71) du logement (70), le relief latéral de tête du coulisseau (83, 84) étant de taille limitée, pour survoler la surface de déflexion (18X, 13X) sans y buter, et toutefois suffisante pour venir atterrir sur la surface de butée d'entraînement (18B, 13B),
**caractérisée par le fait que**,
la surface de déflexion (13X) s'étend jusqu'à un niveau au-dessus de l'arête de coupe frontale (13),
dans laquelle la paire de surfaces (13B, 13X) est portée par un relief commun (18), la plaquette de coupe présentant une pluralité de paires de dits flancs arrière de cadrage (6, 5, 4, 3) et de surfaces de dégagement (13D, 14D, 15D, 16D) à arête de coupe (13, 14, 15, 16), pour offrir une même pluralité de positions angulaires de montage, dans laquelle le dit relief commun (18) présente un profil latéral présentant la dite paire de surfaces en relief (13B, 13X) en au moins une dite pluralité de secteurs d'anneau, formant ainsi globalement une ligne de crête (19) délimitant un cratère (17) à flanc interne (18B) comportant une dite pluralité de surfaces de butée d'entraînement (13B. 14B, 15B, 16B) et à flanc externe (18C) comportant une dite pluralité de surfaces de déflexion (13X, 14X, 15X, 16X).

2. Porte-outil muni d'une plaquette de coupe selon la revendication 1, dans laquelle la surface de butée d'entraînement (13B) est située plus près du flanc arrière (6) que de l'arête frontale (13).

3. Porte-outil muni d'une plaquette selon l'une des revendications 1 ou 2, dans laquelle la surface de déflexion (13X) comporte au moins un rostre (18R) pour fendre les copeaux.

4. Porte-outil muni d'une plaquette selon l'une quelconque des revendications 1 à 3, dans laquelle la surface de déflexion (13X) de la plaquette de coupe est conformée pour dévier les copeaux formés par l'arête de coupe frontale hors d'une trajectoire vers la tête (82) du coulisseau.

5. Porte-outil muni d'une plaquette selon l'une quelconque des revendications 1 à 4, le logement comportant en outre une paroi longitudinale, radiale et axialement arrière (75), porte-outil dans lequel le trou de guidage (71) est orienté pour que le relief latéral de la tête de coulisseau, en butée sur la surface de butée d'entraînement, exerce un effort sur la plaquette de coupe en direction de la surface de fond (71), de la paroi latérale (76) et de la paroi longitudinale radiale et axialement arrière (75).

6. Porte-outil muni d'une plaquette selon la revendication 5, dans lequel le relief latéral de la tête de coulisseau, en butée sur la surface de butée d'entraînement, bloque la plaquette de coupe contre la surface de fond (71), la paroi latérale (76) et la paroi 20 longitudinale radiale et axialement arrière (75).

7. Porte-outil muni d'une plaquette selon l'une quelconque des revendications précédentes, dans lequel le logement (70) comporte un plafond (77) pour former une poche (78) de profondeur supérieure à une valeur de distance entre la surface de flanc arrière de cadrage (6) et la surface de butée (13B).

8. Porte-outil muni d'une plaquette selon la revendication 7, dans laquelle le plafond (77) comporte un volume ouvert (79) de passage du relief latéral de tête du coulisseau (83, 84) lui permettant d'atteindre la surface de butée (13B).

9. Porte-outil muni d'une plaquette selon l'une quelconque des revendications précédentes, dans lequel la surface périphérique du porte-outil, située au-dessus de la plaquette de coupe, est située en retrait par rapport à la surface périphérique du porte-outils, située en dessous de la plaquette de coupe, le retrait étant au moins égal à la moitié de la longueur de la plaquette de coupe entre l'arête de coupe frontale et la surface de flanc arrière.

10. Porte-outil selon l'une quelconque des revendications précédentes, dans lequel le trou de guidage (91) s'étend de façon à ce que le coulisseau (81) passe de façon quasiment tangente au-dessus d'une arête supérieure (91) du flanc arrière (6) de la plaquette (10).

11. Porte-outil muni d'une plaquette selon l'une quelconque des revendications précédentes, comportant un canal longitudinal (109) d'alimentation, en liquide de lubrification, d'un canal (59) ménagé dans le dit coulisseau (81) pour que celui-ci serve de buse.

## Patentansprüche

1. Werkzeughalter bestückt mit einem Schneideinsatz (10), wobei der Schneideinsatz eine Unterseite (2) zum Stellen auf die Bodenfläche (71) eines Gehäuses (70) zum Aufnehmen des Schneideinsatzes, das zu dem Werkzeughalter (101) gehört, aufweist, die einer Oberseite (1) gegenüberliegt, wovon ein Vorderkantenbereich eine Fläche (13D) zur Abfuhr von Spänen bildet, die durch eine verbundene Stirnschneidkante (13) erzeugt sind, und eine hintere Flankenfläche (6) zum Ausrichten in einer Montageposition gegen eine Rückwand (76) des Gehäuses (70) zum Aufnehmen in Ausrichtung der hinteren Flankenfläche (6) des Einsatzes (10) aufweist, wobei der Werkzeughalter auch ein Loch (91) zum Führen in Translation entlang einer bestimmten Richtung (90) eines Körpers (85) eines Schiebers (81) aufweist, wovon ein Kopf (82) ein Radialrelief (83, 84) aufweist, das dazu bestimmt ist, gegen eine Antriebsanschlagfläche (13B) des Einsatzes (10) anzuliegen, die sich auf der Oberseite (1) erhebt, wobei sich auf der Oberseite (1) weiter vorne als die Antriebsanschlagfläche (13B) des Einsatzes (10) durch den Schieber (81) des Werkzeughalters (101) in Richtung der Montageposition eine Abweisfläche (13X) der Flugbahn der Späne weg von einer Richtung (13F) von einem hinteren Rand der Fläche zur Abfuhr (13D) zu der Antriebsanschlagfläche (13B) erhebt, wobei die Richtung (70) des Führungslochs (71) zur Rückwand (76) relativ zu einer Ebene (150) der Gesamtausdehnung der Bodenfläche (71) des Gehäuses (70) abwärts geneigt ist, wobei das seitliche Relief des Kopfes des Schiebers (83, 84) von begrenzter Größe ist, um die Abweisfläche (18X, 13X) zu überfliegen, ohne an sie anzustoßen, und doch von ausreichender Größe ist, um auf der Antriebsanschlag-fläche (18B, 13B) aufzutreffen,
**dadurch gekennzeichnet, dass**
sich die Abweisfläche (13X) bis zu einer Höhe über der Stirnschneidkante (13) erstreckt, wobei das Paar von Flächen (13B, 13X) von einem gemeinsamen Relief (18) getragen ist, wobei der Schneideinsatz mehrere Paare von hinteren Flanken zum Ausrichten (6, 5, 4, 3) und Flächen zur Abfuhr (13D, 14D, 15D, 16D) mit Schneidkante (13, 14, 15, 16) aufweist, um ebenso viele Winkelpositionen zur Montage bereitzustellen, wobei das gemeinsame Relief (18) ein seitliches Profil aufweist, das das Paar von Reliefflächen (13B, 13X) in mindestens mehreren Kreisbereichen aufweist, wobei auf diese Weise insgesamt eine Kammlinie (19) gebildet wird, die einen Krater (17) mit Innenflanke (18B), die mehrere Antriebsanschlagflächen (13B, 14B, 15B, 16B) aufweist, und mit Außenflanke (18C), die mehrere Abweisflächen (13X, 14X, 15X, 16X) aufweist, begrenzt.

2. Werkzeughalter bestückt mit einem Schneideinsatz nach Anspruch 1, wobei die Antriebsanschlagfläche (13B) näher an der hinteren Flanke (6) als an der Stirnkante (13) angeordnet ist.

3. Werkzeughalter bestückt mit einem Einsatz nach einem der Ansprüche 1 oder 2, wobei die Abweisfläche (13X) mindestens einen Sporn (18R) aufweist, um die Späne zu spalten.

4. Werkzeughalter bestückt mit einem Einsatz nach einem der Ansprüche 1 bis 3, wobei die Abweisfläche (13X) des Schneideinsatzes ausgebildet ist, um die Späne, die von der Stirnschneidkante gebildet sind, weg von einer Flugbahn zu dem Kopf (82) des Schiebers abzulenken.

5. Werkzeughalter bestückt mit einem Einsatz nach einem der Ansprüche 1 bis 4, wobei das Gehäuse ferner eine axial rückwärtige und radiale Längswand (75) aufweist, wobei in dem Werkzeughalter das Loch zum Führen (71) ausgerichtet ist, damit das seitliche Relief des Kopfes des Schiebers im Anschlag auf der Antriebsanschlagfläche eine Kraft auf den Schneideinsatz in Richtung der Bodenfläche (71), der Seitenwand (76) und der axial rückwärtigen und radialen Längswand (75) ausübt.

6. Werkzeughalter bestückt mit einem Einsatz nach Anspruch 5, wobei das seitliche Relief des Kopfes des Schiebers im Anschlag auf der Antriebsanschlagfläche den Schneideinsatz gegen die Bodenfläche (71), die Seitenwand (76) und die axial rückwärtige und radiale Längswand (75) blockiert.

7. Werkzeughalter bestückt mit einem Einsatz nach einem der vorhergehenden Ansprüche, wobei das Gehäuse (70) eine Decke (77) aufweist, um eine Tasche (78) mit einer Tiefe, die größer als der Wert der Entfernung zwischen der Fläche der hinteren Flanke zum Ausrichten (6) und der Anschlagfläche (13B) ist, zu bilden.

8. Werkzeughalter bestückt mit einem Einsatz nach Anspruch 7, wobei die Decke (77) ein offenes Volumen zum Durchgang des seitlichen Reliefs des Kopfes des Schiebers (83, 84) aufweist, das ihm ermöglicht, die Anschlagfläche (13B) zu erreichen.

9. Werkzeughalter bestückt mit einem Einsatz nach einem der vorhergehenden Ansprüche, wobei die Umfangsfläche des Werkzeughalters, die über dem Schneideinsatz angeordnet ist, gegenüber der Umfangsfläche des Werkzeughalters zurückversetzt angeordnet ist, die unter dem Schneideinsatz angeordnet ist, wobei die Rückversetzung mindestens gleich der Hälfte der Länge des Schneideinsatzes zwischen der Stirnschneidkante und der Fläche der hinteren Flanke ist.

10. Werkzeughalter bestückt mit einem Einsatz nach einem der vorhergehenden Ansprüche, wobei sich das Loch zum Führen (91) derart erstreckt, dass der Schieber (81) fast tangential über eine obere Kante (91) der hinteren Flanke (6) des Einsatzes (10) vorbeigeht.

11. Werkzeughalter bestückt mit einem Einsatz nach einem der vorhergehenden Ansprüche, umfassend einen längsverlaufenden Kanal (101) zur Zuführung von Schmiermittelflüssigkeit zu einem Kanal (59), der in dem Schieber (81) angeordnet ist, damit dieser als Düse dient.

## Claims

1. A tool holder with a cutting insert (10), the cutting insert having a lower face (2), adapted to be installed at a bottom (71) of a housing (70) forming part of a tool holder (101), opposing an upper face (1) of which a front edge region constitutes a clearance surface (13D) for chips produced by an associated front cutting edge (13), and having a rear side surface (6), for alignment of the cutting insert in a mounting position against a back wall (76) of said housing (70), adapted to co-operate with and align the rear side wall (6) of the insert (10), the tool holder having a hole (91) providing guidance in translatory motion, in a specified direction (90), of a body (85) of a traveling member (81), a head (82) of which includes a radial relief feature (83, 84) adapted to abut against an abutment surface (13B) of the insert (10) upstanding from the upper face (1), wherein, on the upper face (1), a deflecting surface (13X) for deflecting the path of chips away from a direction (13F) running from a rear edge of the clearance surface (13D) to said abutment surface (13B) upstands forwardly with respect to the abutment surface (13B) for driving the insert (10) by a traveling member (81) of the tool holder (101) to the mounting position, the direction (70) of the guide hole (71), running towards the alignment wall (76), being inclined downwards with respect to a plane (150) of general extension of the bottom surface (71) of the housing (70), the lateral relief feature of the head of the traveling member (83, 84) is of limited size, in order to allow it pass over said deflection surface (18X, 13X) without coming into contact therewith, and yet sufficient for it to land on the abutment surface (18B, 13B),
**characterized in that**
the deflecting surface (13X) extends up to a level above the front cutting edge (13), wherein the pair of surfaces (13B, 13X) is carried by a common relief feature (18), the cutting insert having a plurality of pairs of said rear alignment side surfaces (6, 5, 4, 3) and clearance surfaces (13D, 14D, 15D, 16D) with a cutting edge (13, 14 , 15, 16), to offer a corresponding set of angular mounting positions, in which the said common relief feature (18) has a lateral profile which exhibits said pair of surfaces having a relief feature (13B, 13X) at at least one of a plurality of annular segments, thereby forming, overall, a ridge line (19) defining a dished portion (17) having an inner side (18B) exhibiting a said plurality of said abutment surfaces (13B, 14B, 15B, 16B) and with an outer side (18C) exhibiting a plurality of deflecting surfaces (13X, 14X, 15X, 16X).

2. The tool holder with a cutting insert according to claim 1, wherein the abutment surface (13B) is located closer to the rear side (6) than to the front cutting edge (13).

3. The tool holder with an insert according to any one of claims 1 or 2, wherein the deflecting surface (13X) has at least one chip splitting feature (18R) for splitting the chips.

4. The tool holder with an insert according to one of claims 1 to 3, wherein the deflecting surface (13X) of the cutting insert is shaped to deflect chips formed by the front cutting edge out a path directed towards the head (82) of the traveling member.

5. The tool holder with an insert according to one of claims 1 to 4, the housing further including a longitudinal wall, radial and axially back (75), tool holder in which the guide hole (71) is oriented so that the lateral relief feature of the head of the traveling member in abutment against the abutment surface, exerts a force on the cutting insert directed towards the bottom surface (71), the side wall (76) and the longitudinal, radial and axially back wall (75).

6. The tool holder with an insert according to claim 5 wherein the lateral relief feature of the head of the traveling member, abutting against the abutment surface, blocks the cutting insert against the bottom surface (71), the side wall (76) and the longitudinal, radial and axially back wall (75).

7. The tool holder with an insert according to one of the preceding claims, in which the housing (70) has a ceiling (77) to form a pocket (78), the depth of which is greater than a distance between the alignment rear side surface (6) and said abutment surface (13B).

8. The tool holder with an insert according to claim 7, wherein the ceiling (77) has an open volume (79) for passage of the lateral relief feature of the traveling member (83, 84) enabling it to reach the said abutment surface (13B).

9. The tool holder with an insert according to one of the preceding claims, wherein the peripheral surface of the tool holder located above the cutting insert, is set back from the peripheral surface of the tool holder, located below the cutting insert, the amount of setting back being at least equal to half the length of the cutting insert between the front cutting edge and rear side surface thereof.

10. The tool holder with an insert according to one of the preceding claims, wherein the guide hole (91) extends in a manner such that the traveling member (81) passes practically tangentially over an upper edge (91) of the rear side (6) of the cutting insert (10).

11. The tool holder with an insert according to one of the preceding claims, comprising a longitudinal channel (109) adapted to supply a channel (59) provided in said traveling member (81) with a lubricating fluid so that the latter acts as a nozzle.
